(19) Europäisches Patentamt
European Patent Office
Office européen des brevets

(11) **EP 2 037 563 A2**

(12) **EUROPÄISCHE PATENTANMELDUNG**

(43) Veröffentlichungstag:
**18.03.2009 Patentblatt 2009/12**

(51) Int Cl.:
***H02P 3/18*** *(2006.01)*

(21) Anmeldenummer: 08015434.7

(22) Anmeldetag: **02.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **11.09.2007   DE 102007043206**

(71) Anmelder: **Klinger & Born GmbH**
**64395 Brensbach (DE)**

(72) Erfinder: **Heinen, Peter**
**64732 Bad König (DE)**

(74) Vertreter: **Katscher Habermann Patentanwälte**
**Dolivostrasse 15A**
**64293 Darmstadt (DE)**

(54) **Verfahren und Anordnung zum elektrischen Bremsen eines Asynchronmotors**

(57)   Bei einem Verfahren und einer Anordnung zum elektrischen Bremsen eines Asynchronmotors, wobei mindestens einer Wicklung des Motors ein Gleichstrom mit einstellbarer Stromstärke zugeführt wird, ist vorgesehen, dass der Bremsvorgang mit einer vorgegebenen Stromstärke beginnt und eine dadurch bewirkte Änderung eines an mindestens einer Wicklung anstehenden Signals zur Regelung der Stromstärke derart verwendet wird, dass der Motor in einer vorgegebenen Zeit zum Stillstand kommt. Eine vorteilhafte Ausgestaltung besteht darin, dass ein pulsierender Gleichstrom zugeführt wird, dessen Stromstärke durch den Stromflusswinkel geregelt wird, und dass das Signal zwischen den Stromimpulsen verwendet wird.

Fig.1

**Beschreibung**

Die Erfindung betrifft ein Verfahren und eine Anordnung zum elektrischen Bremsen eines Asynchronmotors, wobei mindestens einer Wicklung des Motors ein Gleichstrom mit einstellbarer Stromstärke zugeführt wird.

Aus sicherheitstechnischen Gründen ist eine Bremsung dort erforderlich, wo eine motorisch angetriebene Einrichtung kein permanentes Gegenmoment erhält und nach dem Abschaltvorgang an sich ungebremst ausläuft. Hierdurch können Menschen gefährdet werden, wie dies zum Beispiel bei Sägen, Hobel, Zentrifugen usw. der Fall ist.

Mechanische Bremsvorrichtungen sind einerseits kostenintensiv und unterliegen andererseits einem Verschleiß, so dass zur Gewährleistung ihrer einwandfreien Funktion eine regelmäßige Wartung erforderlich ist.

Es sind daher verschiedene elektrische Bremseinrichtungen bekannt geworden, die auch Elektronikbremsen genannt werden. Eine solche bekannte Bremseinrichtung wird beispielsweise in DE 103 53 741 A1 beschrieben, wobei die Bremsschaltung für einen Elektromotor dadurch verkleinert werden soll, dass anstelle einer bekannten Schaltung mit Brems-Thyristoren und Freilaufdioden eine Bremsschaltung mit zwei Halbleiterschaltelementen vorgeschlagen wird, die mit der Wicklung des Motors verbunden sind und über die ein Bremsstrom schaltbar ist. Bei dieser bekannten Bremseinrichtung wird bei der Erstinbetriebnahme ein Lernvorgang durchgeführt, um einen Bremsstrom zu ermitteln, der eine vorgegebene Bremsdauer bewirkt.

Ferner sind aus DE 35 33 802 A1 eine Schaltungsanordnung und ein Verfahren zur Steuerung eines sanften Anlaufens und einer schnellen definierten Abbremsung bekannt. Diese Schaltungsanordnung ist im Wesentlichen für Positionierantriebe ausgebildet, wobei Drehzahlerfassungseinrichtungen und Näherungsschalter vorgesehen sind.

Durch EP 0 041 191 A2 sind ferner ein Verfahren und eine Schaltungsanordnung zur Gleichstrombremsung einer Drehstrom-Asynchronmaschine bekannt geworden, bei welcher ein bei Stillstand des Rotors und bei dadurch Ausbleiben des Kurzschlussstroms durch eine nicht vom Bremsstrom durchflossene Wicklung eine selbsttätige Abschaltung des Gleichstroms bewirkt wird.

Die bekannten Elektronikbremsen verfügen über Einstellmöglichkeiten, um die Bremsstromstärke sowie die Bremszeit der Einrichtung anzupassen. Diese beiden Parameter werden einmalig maschinen- bzw. werkzeugspezifisch ermittelt und justiert - werden also auf eine bestimmte Anordnung fixiert. Die Grundregel für die maximale Bremszeit bei oben erwähnten Maschinen lautet: In 10 Sekunden muss das Werkzeug stehen, es sei denn, dass die zu treibenden Massen nicht gefahrlos in 10 Sekunden gebremst werden können. In diesem Fall ist eine längere Bremszeit gestattet.

Auf den Bedarf nach Platz sparenden Maschinen bzw. Anlagen reagieren die Maschinenhersteller mit Multifunktionsmaschinen, die mehrere Antriebe und Arbeitsfunktionen vereinen. Speziell in der Holzbearbeitung ist bei den kleineren Multifunktionsmaschinen kein simultanes Arbeiten vorgesehen. Die Arbeitsstationen werden mittels Austausch der Werkzeuge den Anforderungen angepasst (kleines/großes Sägeblatt). Das heißt, die Antriebe werden mit unterschiedlichen Trägheitsmomenten beaufschlagt und die kinetischen Energien differieren stark.

Wegen der seriellen Arbeitsweise ist immer nur ein Motor aktiv und aus Kostengründen werden alle Motore von derselben Steuer- und Bremseinheit bedient. Dies hat zur Folge, dass die Elektronikbremse auf den größten Energieinhalt parametriert wird. Ein neues Einstellen nach einem erfolgten Werkzeugwechsel wird vom Markt nicht akzeptiert und ist zudem fehlerbehaftet. Der schwächste Motor mit der geringsten Schwungmasse wird also mit dem gleichen Bremsstrom beaufschlagt, wie es bei dem stärksten Motor mit der größten Schwungmasse erforderlich ist. Ein höherer Verschleiß bis hin zur Zerstörung der kleineren Motore oder deren Getriebemechanik kann die Folge sein.

Aufgabe der Erfindung ist es daher, den Läufer sowohl eines Drehstrommotors als auch eines Wechselstrommotors mit Anlaufkondensator definiert zu verzögern, um in einem vorgegebenen Zeitfenster bis zum Stillstand abzubremsen. Eine Anpassung an anzutreibende Werkzeuge mit verschiedenen Trägheitsmomenten soll dabei automatisch erfolgen.

Diese Aufgabe wird bei dem erfindungsgemäßen Verfahren dadurch gelöst, dass der Bremsvorgang mit einer vorgegebenen Stromstärke beginnt und eine dadurch bewirkte Änderung eines an mindestens einer Wicklung anstehenden Signals zur Regelung der Stromstärke derart verwendet wird, dass der Motor in einer vorgegebenen Zeit zum Stillstand kommt.

Das erfindungsgemäße Verfahren ermöglicht eine optimale Abbremsung des Motors, die weitgehend unabhängig vom jeweils anzutreibenden Werkzeug ist. Ein weiterer Vorteil besteht darin, dass kein zusätzlicher Sensor erforderlich ist.

Das erfindungsgemäße Verfahren kann an sich mit kontinuierlich fließendem Gleichstrom durchgeführt werden, bei Drehstrom- und Wechselstrommotoren ist es jedoch meistens vorteilhaft, wenn ein pulsierender Gleichstrom zugeführt wird, dessen Stromstärke durch den Stromflusswinkel geregelt wird, und dass das Signal zwischen den Stromimpulsen verwendet wird.

Eine vorteilhafte Ausgestaltung des erfindungsgemäßen Verfahrens besteht darin, dass bei konstantem Stromflusswinkel die Änderung der Amplitude des Signals gemessen wird und dass bei einer Änderung, die größer als eine vorgegebene Änderung ist, der Stromflusswinkel verringert und bei einer Änderung, die kleiner als die vorgegebene Änderung ist, der Stromflusswinkel erhöht wird. Insbesondere kann dabei vorgesehen sein, dass relative Änderungen der Amplitude des Signals gemessen werden.

Diese Ausgestaltung kann in vorteilhafter Weise derart ausgebildet sein, dass die Änderung der Amplitude des Signals durch Differenzbildung von zwei in vorgegebenem Zeitabstand durchgeführten Amplitudenmessungen gemessen wird und dass die Verringerung und die Erhöhung des Stromflusswinkels zu Beginn des Bremsvorgangs in größeren und später in kleineren Schritten erfolgen.

Bei dem erfindungsgemäßen Verfahren kann ferner vorgesehen sein, dass der Bremsvorgang abgeschlossen wird, wenn das Signal einen vorgegebenen Minimalwert mehrmals in Folge unterschreitet.

Eine weitere vorteilhafte Ausgestaltung besteht darin, dass bei konstantem Stromflusswinkel die Änderung der Frequenz des Signals gemessen wird und dass bei einer Änderung, die größer als eine vorgegebene Änderung ist, der Stromflusswinkel verringert und bei einer Änderung, die kleiner als die vorgegebene Änderung ist, der Stromflusswinkel erhöht wird. Insbesondere kann dabei vorgesehen sein, dass relative Änderungen der Frequenz gemessen werden.

Die weitere Ausgestaltung kann in vorteilhafter Weise derart ausgebildet sein, dass die jeweilige Frequenz der Grundwelle des Signals in vorgegebenen Zeitabständen gemessen und die gemessenen Frequenzen zueinander ins Verhältnis gesetzt werden.

Da im Startmoment die erste Welle nicht unbedingt eindeutig ansteht, ist bei einer Weiterbildung vorgesehen, dass die Frequenz der Grundwelle des Signals mit der zweiten fallenden Flanke beginnend gemessen wird. Hierbei können Oberwellen dadurch eliminiert werden, dass das Signal über ein Tiefpass-Filter höherer Ordnung geleitet wird.

Das erfindungsgemäße Verfahren kann bei Wechselstrommotoren mit Phasenschieberkondensatoren und bei Drehstrommotoren in Stern- und Dreieckschaltung durchgeführt werden. Bei einem Drehstrom-Asynchronmotor in Sternschaltung kann der Gleichstrom zwei Wicklungen zugeführt und das Signal über die dritte Wicklung entnommen werden. Bei einem Drehstrom-Asynchronmotor in Dreieckschaltung kann der Gleichstrom über zwei Phasenanschlüsse zugeführt werden, so dass in Bezug auf den Gleichstrom eine Wicklung parallel zu der Reihenschaltung aus den anderen Wicklungen geschaltet ist, und das Signal vom Verbindungspunkt der in Reihe geschalteten anderen Wicklungen abgenommen werden.

Das erfindungsgemäße Verfahren ermöglicht einen einfachen und preiswerten Aufbau der Bremseinrichtung. Insbesondere sind bei einer erfindungsgemäßen Anordnung zum elektrischen Bremsen eines Asynchronmotors, wobei mindestens einer Wicklung des Motors ein Gleichstrom mit einstellbarer Stromstärke zugeführt wird, Mittel vorgesehen, die zu Beginn des Bremsvorgangs eine vorgegebene Stromstärke und eine dadurch bewirkte Änderung an mindestens einer Wicklung anstehenden Signals zur Regelung de Stromstärke derart verwenden, dass der Motor in einer vorgegebenen Zeit zum Stillstand kommt.

Die erfindungsgemäße Anordnung kann derart ausgebildet sein, dass die Mittel zum Zuführen eines pulsierenden Gleichstroms ausgebildet sind, dessen Stromstärke durch den Stromflusswinkel geregelt wird, und dass das Signal zwischen den Stromimpulsen verwendet wird. Als Mittel zum Zuführen des pulsierenden Gleichstroms eignet sich insbesondere ein Thyristor. Es kommen jedoch auch andere Halbleiterschalter, wie beispielsweise IGBTs (Insulated Gate Bipolar Transitors) oder MOSFETs infrage.

Die erfindungsgemäße Anordnung ist nach einer ersten Ausgestaltung gekennzeichnet durch Mittel zur Messung der Änderung der Amplitude des Signals bei konstantem Stromflusswinkel und zur Regelung des Stromflusswinkels derart, dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

Dabei können die Mittel zur Messung der Änderung der Amplitude des Signals derart ausgebildet sein, dass die Änderung der Amplitude des Signals durch Differenzbildung von zwei in vorgegebenem Zeitabstand durchgeführten Amplitudenmessungen gemessen wird und dass die Verringerung und die Erhöhung des Stromflusswinkels zu Beginn des Bremsvorgangs in größeren und später in kleineren Schritten erfolgen.

Eine zweite Ausgestaltung der erfindungsgemäßen Anordnung umfasst Mittel zur Messung der Änderung der Frequenz des Signals bei konstantem Stromflusswinkel und zur Regelung des Stromflusswinkels derart, dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

Dadurch, dass bei einer Weiterbildung dieser Ausgestaltung relative Änderungen der Frequenz gemessen werden, kann diese Anordnung ohne Um- bzw. Einstellung für Motore mit verschiedener Drehzahl und/oder verschiedener Anzahl von Statorwicklungen und Rotorleitern verwendet werden.

Andere Weiterbildungen und Verbesserungen der erfindungsgemäßen Anordnung sind in weiteren Unteransprüchen aufgeführt.

Ausführungsbeispiele der Erfindung werden anhand der Zeichnung im Folgenden erläutert. Es zeigt:

Fig. 1 ein erstes Ausführungsbeispiel für einen Drehstrommotor in Sternschaltung,

Fig. 2 ein zweites Ausführungsbeispiel für einen Drehstrommotor in Sternschaltung,

Fig. 3 ein drittes Ausführungsbeispiel für einen Drehstrommotor in Sternschaltung,

Fig. 4 ein Ausführungsbeispiel für einen Drehstrommotor in Dreieckschaltung,

Fig. 5 den Verlauf des pulsierenden Gleichstroms und des Signals bei einem ersten Ausführungsbeispiel des erfindungsgemäßen Verfahrens,

Fig. 6 den Verlauf des Signals in einem anderen Zeitmaßstab,

Fig. 7 den Verlauf des Signals bei einem anderen Ausführungsbeispiel,

Fig. 8 ein weiteres Ausführungsbeispiel für einen Drehstrommotor in Dreieckschaltung,

Fig. 9 ein Ausführungsbeispiel für einen Nebenschlußmotor,

Fig. 10 ein Ausführungsbeispiel für einen Drehstrommotor an einer gesteuerten Wechselstrombrücke,

Fig. 11 ein Ausführungsbeispiel für einen Drehstrommotor an einer gesteuerten Drehstrombrücke,

Fig. 12 ein Blockschaltbild eines weiteren Ausführungsbeispiels mit einem Drehstrommotor und

Fig. 13 ein Blockschaltbild eines Ausführungsbeispiels mit einem Wechselstrommotor.

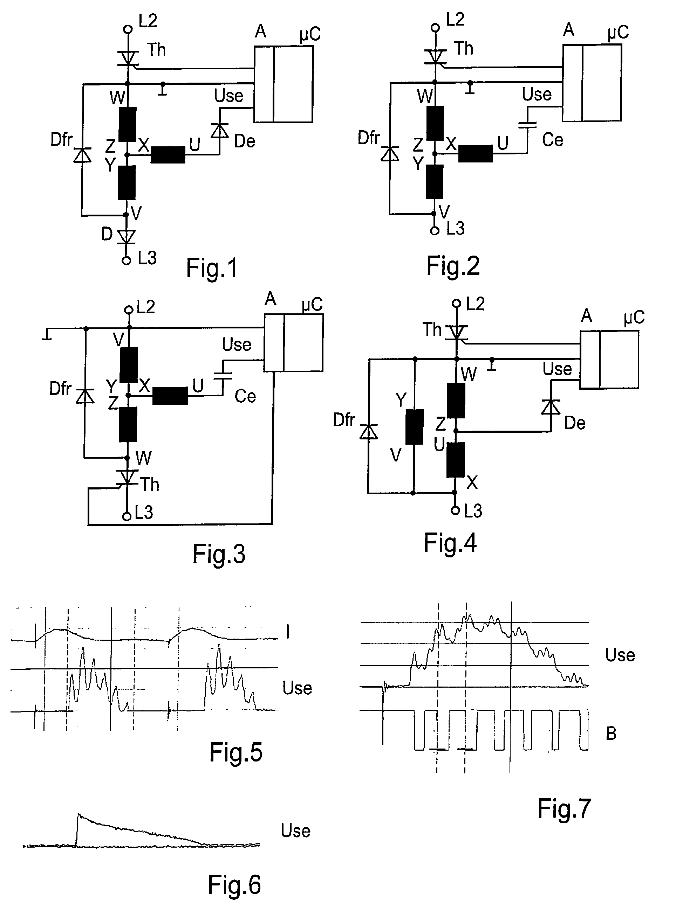

Gleiche Teile sind in den Figuren mit gleichen Bezugszeichen versehen. In den Figuren 1 bis 4 und 8 bis 10 sind der Übersichtlichkeit halber die Beschaltungen der Motorwicklungen nur für den Bremsbetrieb dargestellt. Beim Motorbetrieb sind die Wicklungen in an sich bekannter Weise in Stern- bzw. Dreieckschaltung mit den Phasen L1 bis L3 verbunden. Über Relais erfolgt eine Umschaltung in den Bremsbetrieb, der in den Figuren 1 bis 4 und 8 bis 10 dargestellt ist.

Werden die Statorwicklungen eines Drehstrommotors oder eines Wechselstrommotors von Gleichstrom durchflossen, so erhält man ein stationäres Feld, das im Käfig des Rotors einen Strom induziert, dessen Magnetfeld der Ursache entgegenwirkt (Induktionsgesetz). Das Drehmoment des Motors entsteht aus der Krafteinwirkung des magnetischen Statorfeldes auf das Feld der stromdurchflossenen Leiter im Rotor.

Hieraus resultiert ein negatives Drehmoment, das der Laufrichtung entgegenwirkt und den Rotor bremst. Die Höhe des negativen Drehmoments bestimmt die äußere Beschaltung des Motors, d.h. die Anzahl der Statorwicklungen, die Windungszahl der Statorwicklungen und die Stromstärke. Folgende Aussagen können getroffen werden:

1. Die Krafteinwirkung ist direkt abhängig von der Stromstärke.
2. Die Krafteinwirkung ist abhängig von der Anzahl der beteiligten Statorwicklungen.

In den Figuren 1 bis 4, 8 und 9 bedeuten Use das Mess-Signal (bisher als Signal bezeichnet), Dfr Freilaufdiode, De Entkoppeldiode, Th Thyristor, L2 und L3 Phasen des Drehstromnetzes, U, V, W, X, Y und Z Wicklungsanschlüsse und μC Controller. Mit A sind Anpassungsschaltungen bezeichnet, die beispielsweise Spannungsteiler und Filter für die dem Mikrocontroller zuzuführenden Signale und Treiberschaltungen für die Thyristoren enthalten. Bei den Ausführungsbeispielen nach den Figuren 3, 8 und 9 ist zur Überwindung der Spannungsdifferenz zwischen dem Gate des Thyristors und dem Ausgang des Mikrocontrollers ein Optokoppler vorgesehen.

In der Schaltung gemäß Fig. 1 verursacht der in Fig. 5 dargestellte Stromfluss I durch die Statorwicklungen WZ und YV zuerst im Sternpunkt ein negatives Potenzial gegenüber Masse. Die sich einstellende negative Spannung ist für die Auswertung nicht relevant und wird mittels der Diode De entkoppelt. Zur Entkopplung der Statorwicklungen vom Netz während der negativen Halbwelle kann in der Zuleitung zur Phase L3 eine Diode D vorgesehen sein.

Bei Unterschreitung des Haltestroms löscht der Thyristor und es kommt zum Stromfluss über die Freilaufdiode Dfr. Das Potenzial im Sternpunkt XYZ liegt nun über Masse. Der Induktionsstrom wird vom drehenden Käfigläufer stark beeinflusst und der Abklingvorgang hält bei drehendem Läufer bemerkenswert lange an. Es prägt sich eine überlagerte Grundwelle aus. Die Amplitudenhöhe verhält sich proportional zur Thyristorstromstärke und zur aktuellen Drehzahl.

Unabhängig von der Stromstärke, wird bei einem stehenden Rotor keine nennenswerte Spannung gemessen. Der Stillstand kann somit sicher erkannt werden.

Für einen Wechselstrommotor mit Phasenschieber-Kondensator kann die Schaltung nach Fig. 1 ebenfalls angewendet werden, jedoch entfällt die Statorwicklung UX. Die Entkoppeldiode De ist an den Punkt YZ angeschlossen. Der Kondensator wird vom Wicklungssystem entkoppelt bzw. weggeschaltet.

Die in Fig. 2 dargestellte Schaltung enthält anstelle einer Entkoppeldiode einen Entkoppelkondensator Ce, der auch ohne Diode D (Fig. 1) zu einem gutauswertbaren Signal Use beiträgt.

Fig. 3 zeigt ein Ausführungsbeispiel mit einem Thyristor in der Zuleitung zu L3, was eine Potenzialtrennung in der Anpassungsschaltung erfordert. Fig. 4 zeigt ein Beispiel für einen Drehstrommotor in Sternschaltung mit einer Entkoppeldiode. Je nach Voraussetzungen im Einzelnen, insbesondere der Auslegung der Signalauswertung im Mikrocontroller, kann auch hier ein Entkoppelkondensator verwendet werden.

Die Figuren 5 und 6 zeigen den Stromverlauf als auch den Verlauf des Mess-Signals (Use) während eines Bremsvorgangs. In Fig. 5 stellt das obere Diagramm den pulsierenden Gleichstrom I des Thyristors und der Freilaufdiode Dfr dar. Das untere Diagramm zeigt das Mess-Signal Use - beides während zweier Netzperioden. Der Verlauf der Hüllkurve des Mess-Signals Use ist in Fig. 6 in einem anderen Zeitmaßstab, nämlich während des gesamten Bremsvorgangs, dargestellt.

Der Zündzeitpunkt ist an den Spikes im Mess-Signal Use (verursacht durch die steile Stromflanke und parasitäre Kapazitäten, Übersprechen) gut zu erkennen. Der Strom I steigt nun im Wicklungssystem an. Kurz nach dem Stromscheitel erfolgt der Nulldurchgang der Netzspannung L2_L3. Das Mess-Signal Use wird positiv wie bereits beschrieben.

Es ist zu erkennen, dass eine Grundwelle von Oberwellen überlagert wird. Für die Stillstandserkennung ist entscheidend, dass innerhalb der Zeit von 10 ms, die von den senkrecht gestrichelten Linien eingegrenzt wird (Messfenster), kein positives Signal ansteht.

Wenn der Rotor steht, wird kein nennenswertes Mess-Signal Use erzeugt. Dieses Null-Volt-Signal ist auch bei hoher Stromeinspeisung ein sicherer Indikator für den Stillstand des Rotors.

In dem Ausführungsbeispiel gemäß der eine Dreieckschaltung darstellenden Fig. 4 verursacht der Stromfluss durch die Statorwicklungen YV, WZ und UX zuerst im Punkt ZU ein negatives Potenzial gegenüber Masse. Da die sich einstellende negative Spannung aber für die Auswertung nicht relevant ist, wird sie mittels der Diode De entkoppelt.

Beim Nulldurchgang der nicht dargestellten Wechselspannung löscht der Thyristor Th und es kommt zum Stromfluss über die Freilaufdiode Dfr. Das Potenzial im Punkt ZU liegt nun über Masse. Der Käfigläufer induziert im Wicklungssystem eine Wechselspannung. Es prägt sich eine überlagerte Grundwelle aus. Die Amplitudenhöhe verhält sich proportional zur Thyristorstromstärke und zur aktuellen Drehzahl.

Die Höhe der Spannungspotenziale gegenüber der Sternschaltung sind jedoch unterschiedlich. Der Hauptbremsstrom fließt durch die Wicklung YV und nur ein Teil durch die Wicklungen WZ und UX. Die Summe der Induktionsspannungen UZW und UXU können nicht höher sein als die Spannung UVY. Somit ist nur eine Wicklung wesentlich an der Erzeugung des Gegenmoments beteiligt. Die in Serie liegenden Wicklungen WZ und UX erreichen jeweils nur 25% der Kraft der einzelnen Parallelwicklung YV.

Aus dem Spannungsverlauf des Mess-Signals Use können Informationen zum Bremsverlauf abgeleitet werden, die in Verbindung mit einer entsprechenden Auswerte- und Steuerschaltung, einen automatischen Bremsvorgang ermöglichen. Zunächst wird im Folgenden ein Bremsvorgang erläutert, bei dem die zeitliche Änderung der Amplitude des Mess-Signals Use zur Regelung des Bremsstroms genutzt wird (du/dt-Regelung).

Der Bremsvorgang beginnt immer mit einer hohen Amplitude, die analog zum Verlauf des Bremsvorgangs bis zum Stillstand gegen Null tendiert. Beobachtet man die Hüllkurve des Mess-Signals Use über den gesamten Verlauf, so erhält man eine für einen Drehstrommotor typische Kurve, die in Fig. 6 dargestellt ist.

Die Kurve in Fig. 6 verläuft nicht linear. Es handelt sich im bestimmten Zeitintervall um eine links- und rechtsdrehende Kurve mit Übergang, die in der zweiten f''(t) und dritten Ableitung f'''(t) zu erkennen wäre. Ein Controller ohne Coprozessor ist aber mit dieser Berechnung überfordert - hier wird deshalb eine Vereinfachung vorgenommen.

Weiterhin ist zu berücksichtigen, dass bei jedem Regeleingriff, also bei Änderung des Stellwerts (Bremsstrom), sich der Istwert (Use) sofort ändert und somit ein proportionales Verhalten zeigt, obwohl ein I-Verhalten der Strecke vorliegt. Erschwerend kommt hinzu, dass Parameter wie Induktivität und Gleichstromwiderstand der Wicklung, das Eigenträgheitsmoment des Motors und das Fremdträgheitsmoment der Last sowie deren kinetische Energie unbekannte Größen darstellen. Bei der Änderung der Temperatur des Motors, die immerhin über 100 °K betragen kann, ist zu erwarten, dass einige Parameter driften, wie beispielsweise der Widerstand der Kupferwicklung.

Ein Lösungsansatz geht davon aus, dass die Anzahl der unbekannten Parameter recht groß ist. Eine Regelung der Bremsenergie erscheint unter diesen Gegebenheiten nicht möglich. Bei Änderung der Betrachtungsweise, d.h. Absolutwerte treten in den Hintergrund und der in Zeitintervallen aufgeteilte momentane dynamische Zustand wird in Relation zum Zustand des vorherigen Zeitintervalls gesetzt, bei gleichzeitig vereinfachter Annahme, dass die Bremskurve einer e-Funktion folgt, ist eine Regelung mit einem einfachen Con-troller möglich. Die absolute Größe des Signals wird nicht betrachtet, sondern die Tangente bzw. Sekante der Kurve zu einem bestimmten Zeitpunkt.

Zuerst sorgt eine Spannung dafür, dass ein Stromfluss und analog hierzu ein Magnetfeld entstehen. Die Einweggleichrichtung mit dem Thyristor erlaubt eine Spannungseinstellung von 0V bis hin zu (theoretisch) UNetz/2. In Abhängigkeit von der Drehzahl wirkt die sich einstellende Gegen-EMK des Motors dieser Gleichspannung entgegen und verringert entsprechend die Stromstärke.

Der Bremsstrom bestimmt die Kraft und somit das Gegenmoment, das den Rotor bremst. Der Bremsstrom verursacht jedoch in den Leistungshalbleitern sowie in den Relaiskontakten eine Verlustleistung, die quadratisch mit seiner Höhe ansteigt. Der Bremsstrom ist daher auf einen schaltungsspezifischen Wert zu begrenzen. Die Motorwicklung ist hierbei etwas unkritischer, da sie für ein Vielfaches des Motornennstroms, der in einem kurzen Zeitraum anliegen darf (Anlaufstrom), ausgelegt ist.

Zum Start des Bremsvorgangs wird der Thyristor bei einem fest vorgegebenen Stromwinkel unterhalb 90° gezündet.

Zur Ermittlung der Regelabweichung wird die höchste Amplitude des Mess-Signals Use nach der Thyristorzündung ermittelt und der Wert gespeichert. Nach einer definierten Zeit wird wiederum eine Messung vorgenommen. Der Rotor wurde inzwischen in seiner Drehzahl etwas gebremst. Somit differiert die zweite Signalamplitude Use von der Signalamplitude der ersten Messung.

Für den Differenzquotienten bzw. Differentialquotienten gilt:

$$-du/dt = (Use2 - Use1) / (t2 - t1)$$

Weiterhin soll gelten, dass die Bremskurve im Anfangsbereich einer e-Funktion folgt, die nach 3 Tau annähernd den Wert Null aufweist (Ende des Bremsvorgangs). Der zeitliche Abstand zwischen zwei Messungen soll 200 ms betragen.

Somit gilt im ersten Ansatz:

$$Use2 = Use1 * EXP(-dt/3\ Tau)$$
$$Für\ dt=200\ ms \qquad Use2 = 0,94\ Use1$$
$$-du/dt = 0,06\ Use1\ /\ 200\ ms$$

Wird also im zeitlichen Abstand von 200 ms festgestellt, dass die zweite gemessene Spannung das 0,94-fache der ersten gemessenen Spannung beträgt, ist die Stromstärke richtig eingestellt und der Rotor wird innerhalb von 10s stehen bleiben. Diese theoretische Betrachtung stimmt annähernd mit der Praxis überein und kann leicht durch Veränderung des Faktors im du/dt-Wert an unterschiedliche Anforderungen (schnelleres/langsameres Abbremsen) angepasst werden. Aufgrund der Flexibilität der Controller ist es möglich, auch komplexere Bremsalgorithmen zu realisieren und höhere Genauigkeiten zu erzielen.

Der Bremsvorgang startet mit einem definierten Stromwinkel und es wird angestrebt, schnell die notwendige Stromstärke zu finden. Hierzu wird der Winkel, in einer Art Hochlaufphase (Suchroutine) bis zum Über- oder Unterschreiten des "Sollstroms" in größeren Schritten verändert. Danach ist die Hochlaufphase abgeschlossen und es wird nun in kleineren und somit präziseren Schritten geregelt. Die Gegen-EMK des Motors wirkt sich nicht allzu störend auf das gesamte Bremsverhalten aus, da es sich hierbei um eine kontinuierlich kleiner werdende Größe handelt. Wird eine Stromregelung hinzugeschaltet, so wird die Wirkung der Gegen-EMK praktisch ausgeblendet.

In der Praxis zeigt sich, dass bereits nach wenigen Sekunden (2s - 3s) die geeignete Bremsstromhöhe gefunden wird und ab diesem Zeitpunkt der Strom in seinem Wert fixiert werden kann. Eine Stillstandskennungs-Routine überwacht nun das Mess-Signal Use, bis ein vorgegebener Minimalwert mehrmals in Folge unterschritten wird, und deaktiviert danach die elektronische Bremse.

Im Folgenden wird ein Bremsvorgang erläutert, bei dem die zeitliche Änderung der Frequenz des Mess-Signals Use zur Regelung des Bremsstroms genutzt wird (df/dt-Regelung). Das obere Diagramm in Fig. 7 zeigt den Verlauf des Mess-Signals Use, das untere Diagramm ein zur Messung der Frequenz aus dem Mess-Signal Use abgeleitetes binäres Signal B.

Die Frequenz der Grundwelle ist proportional zur RotorDrehzahl und verzeichnet ein Maximum beim Start und endet bei Null, wenn der Rotor steht. Sehr deutlich zeichnet sich die Grundwelle von der Oberwelle zweiter Ordnung ab und wird für weitere Betrachtungen herangezogen.

Wird nun eine Messung auf die höchste Frequenz der Grundwelle normiert, so spielen die mechanischen Gegebenheiten des Läufers, d.h. die frequenzbestimmende Anzahl der Stäbe im Käfig, für die Auswertung keine Rolle, da wiederum relativ gemessen wird. Ein Bremsvorgang wird somit immer von 100% bis 0% verlaufen.

Die Amplitude der Oberwelle zweiter Ordnung ist zwar noch deutlich zu erkennen, ist aber auf Grund der geringeren Amplitudenhöhe gegenüber der Grundwelle und ihrer deutlich höheren Frequenz leicht zu unterdrücken. Mit entsprechenden Filtern, beispielsweise mit einem externen Butterworth-Filter, externem Digitalfilter oder einem Digitalfilter, das per Software im Controller realisiert wird, ist es möglich, die Grundwelle herauszufiltern und deren Frequenz zu bestimmen. Da im Startmoment die Grundwelle nicht eindeutig ansteht, wird mit der zweiten fallenden Flanke beginnend, die Frequenz gemessen.

Analog zur du/dt-Regelung verhält sich die df/dt-Regelung und somit gilt im ersten Ansatz:

$$f2 = f1 * EXP(-dt/3\ Tau)$$

Für dt=200 ms          $f2 = 0{,}94\ f1$

$$-df/dt = 0{,}06\ f1\ /\ 200\ ms$$

Diese theoretische Betrachtung stimmt annähernd mit der Praxis überein und kann leicht durch Veränderung des Faktors im df/dt-Wert an unterschiedliche Anforderungen (schnelleres/langsameres Abbremsen) angepasst werden.

Der Vorteil dieser Methode ist die kontinuierliche Messung der Drehzahl, ohne bei Änderung der Stellgröße über einen Zeitraum von 200 ms neue Messwerte abwarten zu müssen, wie bei der du/dt-Regelung erforderlich.

In der Praxis ist abzuwägen, welche Methode zum Einsatz kommt, da hier die Programmzeit für die notwendigen Filter-Berechnungen als auch der notwendige Programmspeicherplatz die Möglichkeiten von kleineren Controllern übersteigen kann.

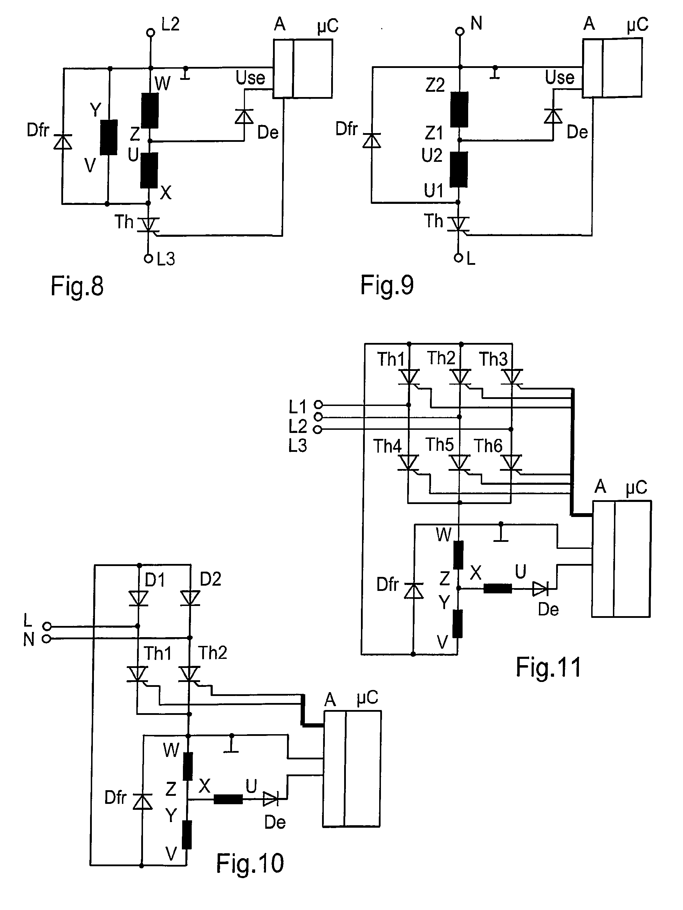

Bei dem Ausführungsbeispiel nach Fig. 8 ist der Thyristor in die Zuleitung zur Phase L3 eingefügt im Gegensatz zum Ausführungsbeispiel nach Fig. 4, bei welchem der Thyristor in der Zuleitung zur Phase L2 liegt. Bei beiden Ausführungsbeipielen kann auch ein Entkoppelkondensator verwendet werden.

Fig. 9 zeigt ein Ausführungsbeispiel für einen Nebenschlussmotor mit zwei Wicklungen Z1, Z2 und U1, U2. Bei dem Ausführungsbeispiel nach Fig. 10 wird zur Erzeugung des Bremsstroms eine gesteuerte Wechselstrombrücke D1, D2, Th1, Th2 verwendet, während bei dem Ausführungsbeispiel nach Fig. 11 hierzu eine gesteuerte Drehstrombrücke Th1 bis Th6 vorgesehen ist.

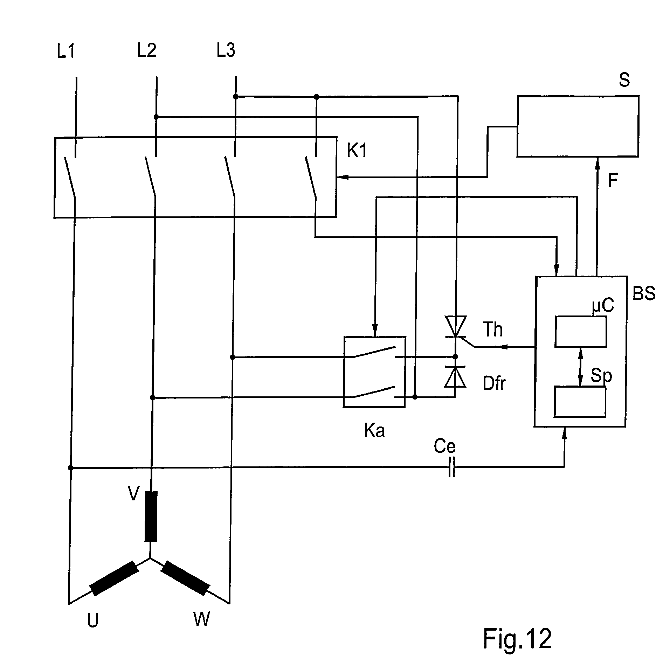

Fig. 12 stellt,in Form eines Blockschaltbildes ein Ausführungsbeispiel einschließlich der zum Betrieb des Motors erforderlichen Teile einer erfindungsgemäßen Anordnung dar mit einem Drehstrommotor, dessen Wicklungen U, V, W über ein Schütz K1 mit den Phasen L1, L2, L3 des Drehstromnetzes verbindbar sind. Das Schütz wird von einem Steuergerät S gesteuert, das unter anderem ein Bedienfeld mit entsprechenden Bedienelementen zum Ein- und Ausschalten des Drehstrommotors enthält.

Das Schütz K1 enthält neben den für die drei Phasen vorgesehenen Kontakten einen vierten Kontakt, der zur Verriegelung mit der Bremsanordnung in dem Sinne dient, dass eine Bremsung nur durchgeführt werden kann, wenn der Motor vom Netz getrennt ist. Dazu ist ein Eingang des Bremssteuergerätes BS über den vierten Kontakt des Schützes K1 mit der Phase L3 verbunden. Umgekehrt erhält das Steuergerät S von dem Bremssteuergerät BS ein Freigabesignal F, welches je nach Ausführung im Einzelnen verhindert, dass unmittelbar nach dem Ausschalten oder während des Bremsvorganges der Motor wieder mit dem Netz verbunden wird. Neben anderen Komponenten weist das Bremssteuergerät BS einen Mikrocon-troller µC und einen Speicher Sp für Programme, Parameter und Variable auf.

Zur Zuführung eines pulsierenden Bremsgleichstroms zur Reihenschaltung aus den Wicklungen V und W ist ein weiteres Schütz Ka vorgesehen, das zu Beginn des Bremsbetriebes vom Bremssteuergerät Bs eingeschaltet wird. Durch eine im Sinne einer Phasenanschnittsteuerung vom Bremssteuergerät vorgenommene Steuerung des Thyristors Th kann die Größe des Bremsstroms - wie bereits im Zusammenhang mit den Figuren 1 bis 6 erläutert - eingestellt werden. Dem Thyristor Th ist in an sich bekannter Weise eine Freilaufdiode Dfr zugeordnet.

In der Wicklung U wird während des Bremsbetriebes ein Signal induziert, das während der nicht leitenden Phasen des Thyristors Th in dem Bremssteuergerät ausgewertet wird. Dazu wird dieses Signal über einen Entkoppelkondensator Ce dem Bremssteuergerät BS zugeführt. Es dient - wie bereits beschrieben - zur Regelung des Bremsstroms und zur Stillstanderkennung.

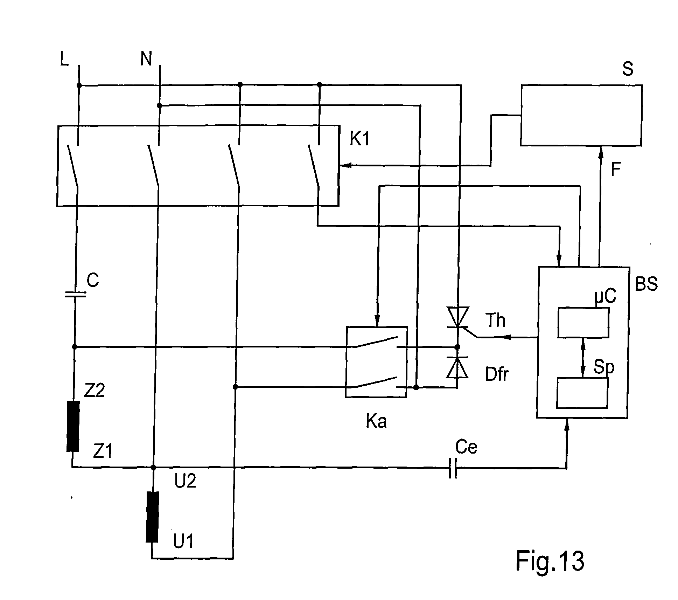

Fig. 13 zeigt ein Blockschaltbild einer erfindungsgemäßen Anordnung mit einem Wechselstrommotor mit zwei Wicklungen Z1/Z2 und U1/U2 und einem Phasenkondensator C. Der Bremsstrom wird der Reihenschaltung aus beiden Wicklungen zugeführt. Der Verbindungspunkt beider Wicklungen ist über die Diode De an einen Eingang des Bremssteuergerätes BS angeschlossen. Die weiteren Teile der Anordnung nach Fig. 13 entsprechen denjenigen nach Fig. 12.

**Patentansprüche**

1. Verfahren zum elektrischen Bremsen eines Asynchronmotors, wobei mindestens einer Wicklung des Motors ein Gleichstrom mit einstellbarer Stromstärke zugeführt wird, **dadurch gekennzeichnet, dass** der Bremsvorgang mit einer vorgegebenen Stromstärke beginnt und eine **dadurch** bewirkte Änderung eines an mindestens einer Wicklung anstehenden Signals zur Regelung der Stromstärke derart verwendet wird, dass der Motor in einer vorgegebenen Zeit zum Stillstand kommt.

**2.** Verfahren nach Anspruch 1, **dadurch gekennzeichnet, dass** ein pulsierender Gleichstrom zugeführt wird, dessen Stromstärke durch den Stromflusswinkel geregelt wird, und dass das Signal zwischen den Stromimpulsen verwendet wird.

**3.** Verfahren nach Anspruch 2, **dadurch gekennzeichnet, dass** bei konstantem Stromflusswinkel die Änderung der Amplitude des Signals gemessen wird und dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

**4.** Verfahren nach Anspruch 3, **dadurch gekennzeichnet, dass** relative Änderungen der Amplitude des Signals gemessen werden.

**5.** Verfahren nach Anspruch 4, **dadurch gekennzeichnet, dass** die Änderung der Amplitude des Signals durch Differenzbildung von zwei in vorgegebenem Zeitabstand durchgeführten Amplitudenmessungen gemessen wird und dass die Verringerung und die Erhöhung des Stromflusswinkels zu Beginn des Bremsvorgangs in größeren und später in kleineren Schritten erfolgen.

**6.** Verfahren nach einem der vorhergehenden Ansprüche, **dadurch gekennzeichnet, dass** der Bremsvorgang abgeschlossen wird, wenn das Signal einen vorgegebenen Minimalwert mehrmals in Folge unterschreitet.

**7.** Verfahren nach Anspruch 2, **dadurch gekennzeichnet, dass** bei konstantem Stromflusswinkel die Änderung der Frequenz des Signals gemessen wird und dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

**8.** Verfahren nach Anspruch 7, **dadurch gekennzeichnet, dass** relative Änderungen der Frequenz gemessen werden.

**9.** Verfahren nach Anspruch 8, **dadurch gekennzeichnet, dass** die jeweilige Frequenz der Grundwelle des Signals in vorgegebenen Zeitabständen gemessen und die gemessenen Frequenzen zueinander ins Verhältnis gesetzt werden.

**10.** Verfahren nach Anspruch 9, **dadurch gekennzeichnet, dass** die Frequenz der Grundwelle des Signals mit der zweiten fallenden Flanke beginnend gemessen wird.

**11.** Verfahren nach einem der Ansprüche 7 bis 10, **dadurch gekennzeichnet, dass** das Signal über ein Tiefpass-Filter höherer Ordnung geleitet wird.

**12.** Verfahren nach einem der vorhergehenden Ansprüche, **dadurch gekennzeichnet, dass** bei einem Drehstrom-Asynchronmotor in Sternschaltung der Gleichstrom zwei Wicklungen zugeführt wird und das Signal über die dritte Wicklung entnommen wird.

**13.** Verfahren nach einem der Ansprüche 1 bis 11, **dadurch gekennzeichnet, dass** bei einem Drehstrom-Asynchronmotor in Dreieckschaltung der Gleichstrom über zwei Phasenanschlüsse zugeführt wird, so dass in Bezug auf den Gleichstrom eine Wicklung parallel zu der Reihenschaltung aus den anderen Wicklungen geschaltet ist, und das Signal vom Verbindungspunkt der in Reihe geschalteten anderen Wicklungen abgenommen wird.

**14.** Anordnung zum elektrischen Bremsen eines Asynchronmotors, wobei mindestens einer Wicklung des Motors ein Gleichstrom mit einstellbarer Stromstärke zugeführt wird, **dadurch gekennzeichnet, dass** Mittel (A, $\mu$C) vorgesehen sind, die zu Beginn des Bremsvorgangs eine vorgegebene Stromstärke einstellen und eine **dadurch** bewirkte Änderung eines an mindestens einer Wicklung anstehenden Signals zur Regelung der Stromstärke derart verwenden, dass der Motor in einer vorgegebenen Zeit zum Stillstand kommt.

**15.** Anordnung nach Anspruch 14, **dadurch gekennzeichnet, dass** Mittel (Th) zum Zuführen eines pulsierenden Gleichstroms ausgebildet sind, dessen Stromstärke durch den Stromflusswinkel geregelt wird, und dass das Signal zwischen den Stromimpulsen verwendet wird.

**16.** Anordnung nach Anspruch 15, **gekennzeichnet durch** Mittel (A, $\mu$C) zur Messung der Änderung der Amplitude des Signals bei konstantem Stromflusswinkel und zur Regelung des Stromflusswinkels derart, dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

**17.** Anordnung nach Anspruch 16, **gekennzeichnet durch** Mittel ($\mu$C) zur Messung der Änderung der Amplitude des Signals derart, dass die Änderung der Amplitude des Signals **durch** Differenzbildung von zwei in vorgegebenem Zeitabstand durchgeführten Amplitudenmessungen gemessen wird und dass die Verringerung und die Erhöhung des Stromflusswinkels zu Beginn des Bremsvorgangs in größeren und später in kleineren Schritten erfolgen.

**18.** Anordnung nach einem der Ansprüche 15 bis 17, **gekennzeichnet durch** Mittel (A, $\mu$C) zur Messung der Änderung der Frequenz des Signals bei konstantem Stromflusswinkel und zur Regelung des Stromflusswinkels derart, dass bei einer Änderung, die größer als eine vorgegebene Änderung ist, der Stromflusswinkel verringert und bei einer Änderung, die kleiner als die vorgegebene Änderung ist, der Stromflusswinkel erhöht wird.

**19.** Anordnung nach Anspruch 18, **dadurch gekennzeichnet, dass** relative Änderungen der Frequenz gemessen werden.

**20.** Anordnung nach einem der Ansprüche 14 bis 19, **dadurch gekennzeichnet, dass** bei einem Drehstrom-Asynchronmotor in Sternschaltung zwei Wicklungen (WZ, VY) mit je einem Pol einer Quelle (L2, Th; L3) für den pulsierende Gleichstrom verbunden sind und dass die dritte Wicklung (UX) an einen Eingang der Mittel (A, $\mu$C) zur Messung angeschlossen ist.

**21.** Anordnung nach einem der Ansprüche 14 bis 20, **dadurch gekennzeichnet, dass** bei einem Drehstrom-Asynchronmotor in Dreieckschaltung zwei Phasenanschlüsse (W, Y; V, X) mit je einem Pol einer Quelle (L2, Th; L3) für den pulsierende Gleichstrom verbunden sind, so dass in Bezug auf den Gleichstrom eine Wicklung (VY) parallel zu der Reihenschaltung aus den anderen Wicklungen (UX, WZ) geschaltet ist und der Verbindungspunkt (ZU) der in Reihe geschalteten anderen Wicklungen (UX, WZ) an einen Eingang der Mittel (A, $\mu$C) zur Messung angeschlossen ist.

**22.** Anordnung nach einem der Ansprüche 14 bis 21, **dadurch gekennzeichnet, dass** die Mittel zur Messung und zur Regelung von einem Controller ($\mu$C) gebildet sind.

**23.** Anordnung nach einem der Ansprüche 15 bis 22, **dadurch gekennzeichnet, dass** das Signal einem Eingang der Mittel (A, $\mu$C) zur Messung über einen Entkoppelkondensator (Ce) zuführbar ist.

**24.** Anordnung nach einem der Ansprüche 15 bis 22, **dadurch gekennzeichnet, dass** das Signal einem Eingang der Mittel (A, $\mu$C) zur Messung über eine Entkoppeldiode (De) zuführbar ist.

Fig.1

Fig.2

Fig.3

Fig.4

Fig.5

Fig.6

Fig.7

Fig.8

Fig.9

Fig.10

Fig.11

Fig.12

Fig.13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10353741 A1
- DE 3533802 A1

- EP 0041191 A2